**Europäisches Patentamt**

(19) **European Patent Office**

**Office européen des brevets**

(11) Veröffentlichungsnummer: **0 041 480**
**B1**

(12) EUROPÄISCHE PATENTSCHRIFT

(45) Veröffentlichungstag der Patentschrift:
27.07.83

(51) Int. Cl.³: **B 01 D 17/06**, C 02 F 1/46

(21) Anmeldenummer: **81810204.8**

(22) Anmeldetag: **29.05.81**

(54) Trennung von Öl-in-Wasser Emulsionen durch Elektrolyse.

(30) Priorität: **04.06.80 CH 4333/80**

(43) Veröffentlichungstag der Anmeldung:
**09.12.81 Patentblatt 81/49**

(45) Bekanntmachung des Hinweises auf die Patenterteilung:
**27.07.83 Patentblatt 83/30**

(84) Benannte Vertragsstaaten:
**AT CH DE FR GB IT LI SE**

(56) Entgegenhaltungen:
**AT-B-23 496**
**CH-A-598 851**

(73) Patentinhaber: **CIBA-GEIGY AG, Patentahteilung Postfach, CH-4002 Basel (CH)**

(72) Erfinder: **Marfurt, Hans-Rudolf, Dr., 34, route des Préalpes, CH-1723 Marly (CH)**
Erfinder: **Zürrer, August, 4, chemin Forêt, CH-1723 Marly (CH)**

BUNDESDRUCKEREI BERLIN

## Trennung von Öl-in-Wasser-Emulsionen durch Elektrolyse

Die vorliegende Erfindung betrifft die Trennung von gegebenenfalls tensidhaltigen Öl-in-Wasser-Emulsionen durch Elektrolyse. Diese Trennung ist insbesondere zur Reinigung von Abwässern geeignet, die Öl oder Öl und oberflächenaktive Hilfsmittel (Tenside) enthalten. Solche Abwässer fallen z. B. bei Autoreparaturwerkstätten und anderen mechanischen Werkstätten, bei Autowasch- und Motorenwaschanlagen, z. B. Auto- oder Flugzeugmotorenwaschanlagen, ferner auch bei Maschinenfabriken und Stahlwerken an, können aber auch Kommunalabwässer sein.

Es ist bekannt, Öl-in-Wasser-Emulsionen ohne emulgierende Zusätze durch Behandlung mit z. B. Aktivkohle zu trennen, d. h., das Öl an die Kohle zu adsorbieren. Dieses Verfahren benötigt jedoch zusätzliche und aufwendige Trennoperationen, um die Wasserreinigung sicherzustellen.

Öl-in-Wasser-Emulsionen mit emulgierenden Zusätzen lassen sich auf adsorptivem Wege nicht auftrennen.

Es sind ferner Verfahren und Vorrichtungen zum Aufarbeiten wäßriger Ölemulsionen durch Elektrolyse bekannt (AT-A-23 496, CH-A-598 851). Diese Verfahren werden der gestellten Aufgabe jedoch noch nicht voll gerecht, da sie einerseits die Öl-in-Wasser-Emulsionen nur langsam und unvollständig brechen und andererseits zur Abtrennung der Ölphase aufwendige Maßnahmen in Form von z. B. Filtern oder Absetzbecken notwendig sind.

Aufgabe der vorliegenden Erfindung ist es daher, für die beiden angegebenen Arten von Öl-in-Wasser-Emulsionen ein Trennverfahren (Verfahren zur Reinigung von (Ab)wasser) bereitzustellen, das einerseits einen hohen Wirkungsgrad hat und andererseits mit einfachen Mitteln kontinuierlich und schnell durchgeführt werden kann.

Es wurde nun gefunden, daß die gestellte Aufgabe durch das nachfolgend beschriebene Elektrolyseverfahren gelöst werden kann.

Gegenstand der vorliegenden Erfindung ist daher ein Verfahren zur kontinuierlichen Trennung von gegebenenfalls tensidhaltigen Öl-in-Wasser-Emulsionen durch Elektrolyse, dadurch gekennzeichnet, daß man solche Emulsionen bei einem pH-Wert von 5 bis 10 und bei einer Spannungsdifferenz zwischen den Elektroden von mindestens 1,5 Volt, gegebenenfalls nach Zugabe eines Koaguliermittels unter Bildung von diskreten Ölteilchen elektrolysiert, diese Ölteilchen in einem Flotationsdekanter mit Hilfe von an der Kathode gebildeten gasförmigen Wasserstoff unter Bildung einer öligen Phase, die gegebenenfalls noch durch die Zugabe von Flockungsmitteln verdichtet wird, flotiert und abtrennt.

Das Verfahren kann also ohne Verwendung eines Koaguliermittels und ohne Zugabe bzw. in Gegenwart von Flockungsmitteln durchgeführt werden. Andererseits kann man ein Koaguliermittel verwenden und das Flockungsmittel weglassen oder einsetzen. Bevorzugt ist die letzte Alternative, d. h. die Verwendung eines Koaguliermittels bei der Elektrolyse sowie die Zugabe eines Flockungsmittels zur Verdichtung der Ölphase.

Weitere Gegenstände der vorliegenden Erfindung sind ferner die Vorrichtung (Elektrolysezelle oder mehrere hintereinandergeschaltete Elektrolysezellen) zur Durchführung des Verfahrens, die mit einem speziellen Flotationsabscheider (Flotationsdekanter) kombiniert ist, sowie die Anwendung des erfindungsgemäßen Verfahrens zur Reinigung von Prozeß- und Abwässern.

Die Emulsionen, die erfindungsgemäß getrennt werden, sollen pH-Werte im Bereich von 5 bis 10, vorzugsweise im Bereich von 6 bis 8, aufweisen. Durch Zugabe üblicher Basen, z. B. Alkalimetallhydroxiden, wie insbesondere Natrium- oder Kaliumhydroxid, oder Säuren, wie z. B. anorganischen Säuren (Schwefel- oder Salzsäure) oder niedermolekularen organischen Säuren (Essigsäure, Ameisensäure) kann der pH-Wert im angegebenen Bereich eingestellt werden. Die genannten Basen und Säuren werden in der Regel als verdünnte wäßrige Lösungen eingesetzt.

Sofern notwendig — wenn z. B. die zwischen Anode und Kathode zu überwindende Spannung zu groß ist — kann man in die Emulsionen zur Verbesserung der Leitfähigkeit noch andere Elektrolyte, insbesondere anorganische Salze (Kochsalz), geben.

Bei dem Öl (den Kohlenwasserstoffen), das (die) sich in den zu trennenden Emulsionen befindet (befinden), kann es sich z. B. um Benzin, leichte und schwere Heizöle, Bohröle oder Schmieröle handeln, die außerdem übliche Zusätze enthalten können. So enthalten Bohröle z. B. zusätzlich Emulgatoren.

Die Tenside, die sich in den ölhaltigen Abwässern (Öl-in-Wasser-Emulsionen) befinden können, sind solche wie sie in handelsüblichen Waschmitteln (Waschpulvern, Waschpasten, Kaltreinigern) zum Einsatz gelangen. Sie sind in der Regel nichtionische oder anionische Verbindungen; sie können aber auch kationisch, amphoter oder zwitterionisch sein.

Als nichtionische Tenside kommen in erster Linie Polyglykolätherderivate von aliphatischen oder cycloaliphatischen Alkoholen, gesättigter oder ungesättiger Fettsäuren und Alkylphenolen in Frage, die etwa 3 bis 30 Glykoläthergruppen und 8 bis 20 Kohlenstoffatome im (aliphatischen) Kohlenwasserstoffrest und etwa 6 bis 18 Kohlenstoffatome im Alkylrest oder Alkylphenole enthalten können. Vorzugsweise handelt es sich um Polyglykolätherderivate, in denen die Zahl der Äthylenglykoläthergruppen 5 bis 25 beträgt und deren Kohlenwasserstoffreste sich von geradkettigen, primären Alkoholen mit 12 bis 18 Kohlenstoffatomen oder von Alkylphenolen mit einer geradkettigen, 6 bis 14 Kohlenstoffatome aufweisenden Alkylkette ableiten. Gegebenenfalls sind die letztgenannten Polyäthylenglykoläther durch Anlagerung von Propylenoxyd, z. B. 3 bis 25 Mol, weiter modifiziert.

Weitere nichtionische Tenside sind wasserlösliche 20 bis 250 Äthylenglykoläthergruppen und 10 bis 100 Propylenglykoläthergruppen enthaltende Polyäthylenoxidaddukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Polyglykol-Einheit 1 bis 5 Äthylenglykoleinheiten. Auch nichtionische Verbindungen vom Typ der langkettigen Aminoxide und Sulfoxide, die gegebenenfalls auch äthoxyliert sein können, werden verwendet.

Die anionischen Tenside sind beispielsweise solche vom Sulfonat- oder Sulfattyp, wie die Alkylbenzolsulfonate mit z. B. 6 bis 18 Kohlenstoffatomen im Alkylteil, insbesondere n-Dodecylbenzolsulfonat, ferner Olefinsulfonate, wie sie z. B. durch Sulfonierung primärer oder sekundärer aliphatischer Monoolefine mit gasförmigem Schwefeltrioxid und anschließend alkalische oder saure Hydrolyse erhalten werden, sowie Alkylsulfonate mit z. B. vorzugsweise 10 bis 24 Kohlenstoffatomen, wie sie aus n-Alkanen durch Sulfochlorierung oder Sulfoxidation und anschließend Hydrolyse bzw. Neutralisation oder durch Bisulfitaddition an Olefine erhältlich sind. Man verwendet auch $\alpha$-Sulfofettsäureester sowie primäre und sekundäre Alkylsulfate von höhermolekularen Alkoholen. Weitere Verbindungen dieser Klasse sind die höhermolekularen sulfatierten Teiläther und -ester von mehrwertigen Alkoholen, z. B. deren Alkalisalze oder Monoalkyläther bzw. Monofettsäureester des Glycerinmonoschwefelsäureesters bzw. der 1,2-Dioxypropansulfonsäure. Ferner können Sulfate von äthoxylierten und/oder propoxylierten Fettsäureamiden und Alkylphenolen sowie Fettsäuretauride vorhanden sein. Weitere Tenside sind die sulfonierten Benzimidazolderivate sowie Alkaliseifen von Fettsäuren natürlichen oder synthetischen Ursprungs, z. B. die Natriumseife von Kokosfett-, Palmkern- oder Talgfettsäuren.

Amphotere Tenside sind z. B. Derivate von aliphatischen sekundären und tertiären Aminen oder aliphatische Derivate heterocyclischer sekundärer und tertiärer Amine, in denen die aliphatischen Reste gerade oder verzweigt sein können, und worin einer der aliphatischen Reste etwa 8 bis 18 Kohlenstoffatome enthält und mindestens ein aliphatischer Rest eine anionische wasserlöslichmachende Gruppe trägt.

Zwitterionische Tenside sind z. B. Derivate von aliphatischen quaternären Ammonium-, Phosphonium- und Sulfoniumverbindungen, in denen die aliphatischen Reste gerade oder verzweigt sein können, einer der aliphatischen Reste etwa 8 bis 18 Kohlenstoffatome enthält und eine dieser Gruppen eine anionische wasserlöslichmachende Gruppe trägt.

Beispiele für solche Tenside sind Alkylbetaine und insbesondere Alkylsulfobetaine, wie das 3-(N,N-Dimethyl-N-alkylammonium)-propan-1-sulfonat und 3-(N,N-Dimethyl-N-alkylammonium)-2-hydroxypropan-1-sulfonat.

Kationische Tenside sind z. B. Ammoniumsalze mit mindestens einem langkettigen, in der Regel von einer Fettsäure abgeleiteten Rest wie Distearyldimethylammoniumchlorid, Stearyldimethylbenzylammoniumchlorid, Kokosnußalkyldimethylbenzylammoniumchlorid, Dikokosnußalkyldimethylammoniumchlorid, Cetylpyridiniumchlorid und Cetyltrimethylammoniumbromid.

Die anionischen Tenside können in Form von Natrium-, Kalium- und Ammoniumsalze sowie als Salze organischer Basen, wie Mono-, Di- und Triäthanolamin, vorliegen. Sofern die genannten anionischen und zwitterionischen Verbindungen einen aliphatischen Kohlenwasserstoffrest besitzen, ist dieser bevorzugt geradkettig und kann 8 bis 26, insbesondere 8 bis 22 Kohlenstoffatome aufweisen. In den Verbindungen mit einem araliphatischen Kohlenwasserstoffrest enthalten die vorzugsweise unverzweigten Alkylketten durchschnittlich etwa 6 bis 18 Kohlenstoffatome.

Als Koaguliermittel, die vor der Elektrolyse den zu reinigenden wäßrigen Emulsionen zugesetzt werden können und z. B. in einer Menge von 0,02 bis 0,3 g/l angewendet werden, kommen polymere Verbindungen z. B. auf Cellulosebasis, wie Carboxymethylcellulose oder Methylcellulose; Alginate (Alkalimetallsalze der Alginsäure); Gelatine und Gelatinederivate (Pfropfcopolymere aus äthylenisch ungesättigten Monomeren und Gelatine); Kernmehlpräparate (Galactomannane), z. B. Johannisbrotkernmehlpräparate, insbesondere teilweise verätherte Produkte, oder gegebenenfalls auch polymeres Aluminiumchlorid in Frage.

Als Flockungsmittel, die gegebenenfalls im erfindungsgemäßen Verfahren eingesetzt werden, um die Abscheidung der Ölphase zu erleichtern, eignen sich z. B. Umsetzungsprodukte aus Dicyandiamid, Aminsalzen (insbesondere Ammoniumchlorid) und Formaldehyd im Molverhältnis 1 : 1 : 2 wie sie aus der CH-A-471 803 bekannt sind. Weitere Amine, die in Form ihrer Aminsalze für die Herstellung der Umsetzungsprodukte geeignet sind, sind aliphatische, cycloaliphatisch, aromatische und heterocyclische Monoamine, wie z. B. Methylamin, Äthylamin, Äthanolamin, Allylamin, n-Propylamin, n-Butylamin, Isobutylamin, Amylamin, Stearylamin, Oleylamin, Cyclohexylamin, Anilin, p-Aminophenol, Aminopyrimidin oder Aminopyridin. Die Salze können sich von organischen Säuren, wie Ameisensäure oder Essigsäure, oder vorzugsweise von starken Mineralsäuren wie Salzsäure oder Schwefelsäure ableiten.

Eine weitere geeignete Gruppe von Flockungsmitteln sind z. B. Kondensationsprodukte aus Dicyandiamid oder Dicyandiamidin, gegebenenfalls Harnstoff, Formaldehyd und gegebenenfalls einem Alkylenpolyamin mit 2 bis 8 Kohlenstoffatomen.

Bei den Alkylenpolyaminen handelt es sich z. B. um Tetraäthylenpentamin, Triäthylentetramin, Diäthylentriamin, Äthylendiamin, Propylendiamin oder Butylendiamin.

Geeignete Produkte sind vor allem Formaldehyd-Dicyandiamid-Äthylendiamin- oder Dicyandiamid-Formaldehyd- oder Formaldehyd-Harnstoff-Dicyandiamid-Kondensationsprodukte. Bevorzugte Produkte werden z. B. durch Kondensation von 2 Mol Formaldehyd mit 1 Mol des Umsetzungsproduktes von 2 Mol Dicyandiamid mit 1 Mol Äthylendiamin bzw. dem entsprechenden Säuresalz wie Hydrochlorid erhalten. Andere ebenfalls bevorzugte Produkte werden durch Kondensation von je 1 Mol Harnstoff, Dicyandiamid und Formaldehyd in Gegenwart von Säure wie Salzsäure oder durch Kondensation von 1 Mol Dicyandiamid mit 2 Mol Formaldehyd hergestellt.

Weitere vorteilhafte Produkte werden durch Kondensation von 3 bis 4 Mol Dicyandiamid mit 7 Mol Formaldehyd und 1 Mol des Tetrahydrochlorids von Triäthylentetramins erhalten.

Als Flockungsmittel können ferner auch Metallsalze mehrwertiger Metalle, z. B. Aluminiumsalze, von Fettsäuren mit 12 bis 18, insbesondere 16 bis 18 Kohlenstoffatomen verwendet werden. Diese Metallsalze liegen normalerweise in emulgierter Form vor. Gegebenenfalls können diese Emulsionen Paraffinöl und organische Lösungsmittel enthalten. Geeignet ist ferner auch polymeres Aluminiumchlorid.

Als Flockungsmittel geeignet sind auch Polymere auf z. B. (Meth)acrylsäure/(Meth)acrylamidbasis, die kationisch, anionisch oder neutral sein können. Die Molekulargewichte dieser Polymeren liegen etwa im Bereich von $10^5$ bis $10^9$. Kationische Vertreter sind z. B. Copolymere aus (Meth)acryloxyalkylen($C_1$—$C_4$)trialkyl($C_1$—$C_2$)-ammoniumsalzen (Halogeniden, Methosulfaten) und (Meth)acrylamid, sowie gegebenenfalls weiteren äthylenisch ungesättigten Comonomeren (Acrylnitril), wie das Copolymer aus 90 Mol-% Methacryloxyäthylentrimethylammoniumchlorid und 10 Mol-% Acrylamid mit einem Molekulargewicht von etwa $6 \cdot 10^6$.

Typische anionische Vertreter sind (Meth)acrylsäure (bzw. deren Alkalimetallsalze)/(Meth)acrylamid-Copolymere oder Copolymere aus diesen Monomeren und weiteren äthylenisch ungesättigten Comonomeren (Acrylnitril), wie z. B. Copolymere aus 35 Mol-% Methacrylsäure und 65 Mol-% Acrylamid (MG $1,5 \cdot 10^7$) oder aus 10 Mol-% (Meth)acrylsäure und 90 Mol-% Acrylamid (MG $0,5-1 \cdot 10^7$). Polyacrylamide mit Molgewichten zwischen $10^6$ und $10^8$ sind geeignete nichtionische Flockungsmittel.

Die erfindungsgemäß verwendeten Flockungsmittel können auch in Kombination mit anderen Flockungsmitteln eingesetzt werden.

Die Menge Flockungsmittel (berechnet als Wirksubstanz) pro Liter Öl-in-Wasser-Emulsion beträgt etwa 0,1 bis 100 mg/l, insbesondere 0,1 bis 50 und vorzugsweise 0,1 bis 10 mg/l.

Typische Gebrauchsmengen können zwischen 1 und 50 mg/l liegen.

Die Flockungsmittel werden in der Regel nach Beendigung der Elektrolyse in die zu trennenden Emulsionen (zu reinigenden Abwässer) gegeben, um die Ölphase zu verdichten und eine Abscheidung zu erleichtern.

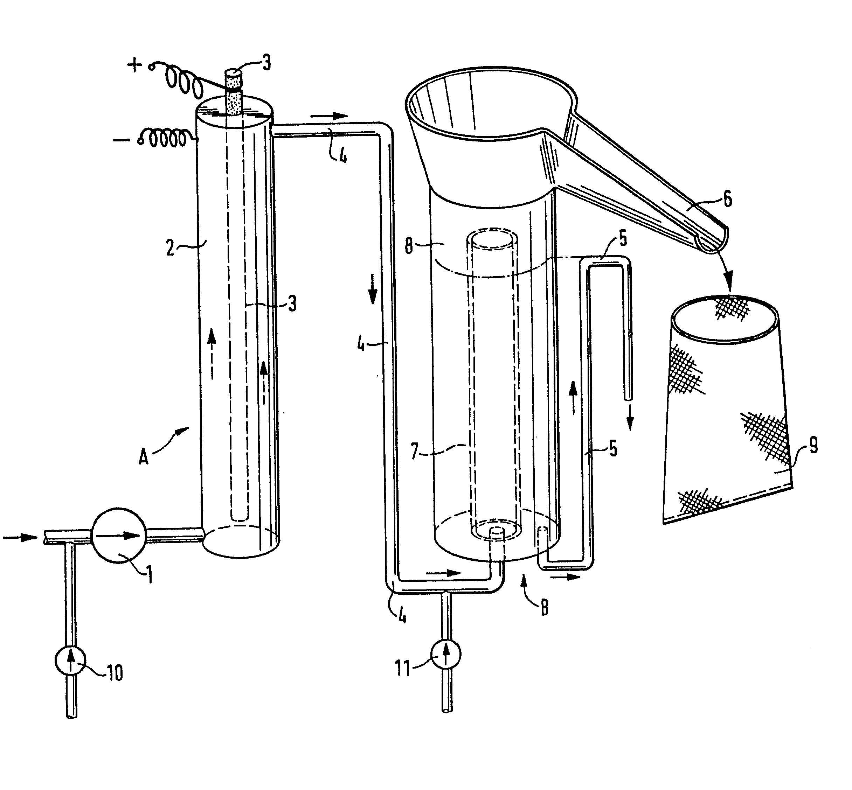

Die Vorrichtung zur Durchführung des erfindungsgemäßen Verfahrens wird an Hand der Figur näher erläutert.

Eine Zubringerpumpe (1) treibt das emulsionshaltige Abwasser von unten nach oben durch eine Elektrolysezelle (A). Diese besteht aus einem äußeren, als Kathode geschalteten Metallmantel (2) und einer ins Mantelrohr konzentrisch eingesetzten, stabförmigen Opfer- oder Inertanode (3). Beim Durchtritt durch die Elektrolysezelle wird auf der Seite der Anode die Emulsion unter der Wirkung des in Lösung gehenden Metalls gebrochen. Es bildet sich hierbei Metallhydroxid, welches die aus der Emulsion befreiten Öltröpfchen adsorbiert. Auf der Seite der Kathode wird Wasserstoff freigesetzt, der sich an die Metallhydroxid/Ölflocken anlagert und diese dadurch zur Flotation bewegt. Aus der Elektrolysezelle tritt also ein Zweiphasengemisch, bestehend aus schwimmfähigem Ölschlamm einerseits und dem entölten Abwasser andererseits. Dieses Gemisch wird dem Flotationsdekanter (B) über ein Verbindungsrohr (4) zugeleitet, und zwar so, daß es zunächst durch ein inneres Rohr (7) strömt, welches konzentrisch in ein zweites, äußeres Rohr (8) gestellt ist.

In diesem äußeren Rohr stellt sich ein Wasserniveau auf die Höhe des Niveaurohrs (5) ein. Der Schlamm strömt, getrieben durch den Wasserstoff, zur Wasseroberfläche, baut sich dort auf, verliert dabei teilweise sein Wasser, überquillt selbsttätig in den geneigten, kragenförmigen Ausguß (6) und wird in einem Schlammabtropfsack (9) aus lockerem Gewebe (Jute) aufgefangen. Hier tropft der Schlamm bis zur Stichfestigkeit ab. Das vom Schlamm befreite, geklärte Abwasser verläßt das System über das Niveaurohr (5).

Je nach Beschaffenheit der zu behandelnden Abwässer können über die Dosierpumpen (10) und (11) Koagulier- und Flock- oder Flotationshilfsmittel eingespeist werden, die in der Regel die Flockenbildung günstig beeinflussen.

Diese Vorrichtung kann in mannigfaltiger Weise umgestaltet sein. So kann z. B. der als Kathode geschaltete Metallmantel (2) als rechteckiger Behälter und die Anode (3) blattförmig ausgebildet sein oder die Dosierpumpe (10) kann nach der Zubringerpumpe (1) angebracht sein.

Durch Hintereinanderschalten zweier oder mehrerer solcher Elektrolysezellen kann der Trenneffekt verbessert werden, insbesondere dann, wenn das Anodenmaterial beider Zellen voneinander verschieden ist (z. B. Austausch einer Aluminiumanode durch eine Eisenanode). Die Abscheidung des Ölschlamms kann nach jeder Elektrolysestufe oder nur einmal nach Beendigung der Elektrolyse erfolgen.

Das Elektrodenmaterial zur Durchführung der Elektrolyse besteht aus üblichen hierfür geeigneten Materialien. So besteht die Anode, die als Inert- oder Opferanode ausgebildet sein kann, z. B. aus Graphit, Jod oder Platin (Inertanode), Eisen, Zink oder Aluminium, während die Kathode in der Regel aus Graphit, Eisen, Messing oder Kupfer besteht.

Bevorzugt sind die Inertanoden aus Graphit, die Opferanoden aus Eisen oder Aluminium; als Kathoden sind solche aus Graphit oder Eisen besonders geeignet.

Die Bedingungen zur Durchführung der Elektrolyse hängen von der Art der Emulsionen und auch vom Elektrodenmaterial ab. Im allgemeinen wird die Elektrolyse jedoch bei einer Spannungsdifferenz zwischen den Elektroden von 1,5 bzw. 1,8 bis 20 Volt und bei einer Stromstärke von 10 bis 100 mA pro cm² Elektrodenfläche durchgeführt.

Der Abstand der Elektroden beträgt etwa 0,5 bis 2,5 cm, vorzugsweise 1,5 cm.

Durchflußmengen von etwa 2 bis 20 l/Stunde sind in Elektrolysezellen möglich, in denen die Kathode ein Rohr von etwa 80 cm Länge und 2,5 bis 3 cm Durchmesser ist und die Anode einen Durchmesser von etwa 1 bis 2 cm hat und etwa 100 cm lang ist. Die angelegte Gleichspannung beträgt etwa 15 Volt, die Stromstärke etwa 10 Ampère.

Durchflußmengen von etwa 1000 bis 10 000 l/ Stunde sind möglich, wenn die Elektrolysezellen folgende Abmessungen aufweisen: Kathode — Länge etwa 150 cm, Durchmesser etwa 8 cm; Anode — Länge 170 cm, Durchmesser etwa 6 cm.

Falls die Anode als Opferanode eingesetzt wird, geht diese als Metallhydroxid in Lösung, wobei das Zeta-Potential der dispersen Lösung gegen Null strebt. Bei diesem Vorgang wird die Emulsion gebrochen. An der Kathode entsteht bei Spannungen über 1,5, z. B. bei 1,8 oder 2 Volt Wasserstoff, der sich am gebildeten Ölschlamm anlagert und diesen zur Flotation bewegt. Die Flotation kann verbessert und die mögliche Ablagerung von Elektrolyseprodukten auf der Oberfläche der Elektrode verhindert werden, wenn während der Elektrolyse Luft in das Elektrolysegefäß eingeblasen wird.

Das Abwasser besteht nach dem Verlassen des Elektrolyseurs aus einem Zweiphasengemisch, der wäßrigen, entölten Lösung einerseits und dem Agglomerat feinster, ölhaltiger Schlammflocken (gegebenenfalls durch Koaguliermittel stabilisiert) andererseits. Letztere können durch Zugabe geeigneter Flockungshilfsmittel zu Großflocken verdichtet werden.

Die entstandenen Ölflocken lassen sich ohne Mühe in einem Flotationsdekanter (B) abscheiden.

Die Bestimmung des im Abwasser vorhandenen Ölgehaltes vor und nach der Elektrolyse kann wie folgt durchgeführt werden.

Die zu bestimmende Probe wird mit Chloroform extrahiert und der Rückstand soweit wie nötig eingeengt.

Im Infrarotspektrum kann bei einer Wellenzahl von 2935 cm⁻¹ ein für aliphatische Öle typisches Absorptionsmaximum ausgemessen werden, dessen Extinktionswert mit genügender Genauigkeit dem Ölgehalt proportional ist.

Eine weitere Bestimmungsmethode verwendet zur Extraktion der Proben Tetrachlorkohlenstoff. Der Ölgehalt wird durch Messung der Infrarotabsorption der erhaltenen Lösungen bei 3400 — 3500 nm bestimmt.

Das erfindungsgemäße Verfahren ist z. B. zur Trennung von Öl-in-Wasser-Emulsionen geeignet, die 10 bis 50 000, z. B. 10 bis 20 000 ppm (oder 10 bis 2000 bzw. 50 bis 1000 ppm) Öl oder öliger Substanzen und 100 bis 5000 ppm eines Tensides enthalten.

Die Wirksamkeit des Verfahrens ist ausgezeichnet, in dem gleichzeitig Öl (ölhaltige Substanzen) und Tenside aus (Ab)wässern entfernt werden können, und man z. B. den Ölgehalt auf Werte bis unter 1 ppm senken kann.

In den nachfolgenden Beispielen wird die Erfindung näher erläutert.

Beispiele

Beispiel 1

100 Liter einer Ölemulsion, die 50 ppm Heizöl und 100 ppm eines Tensidgemisches aus nichtionischen und anionischen Tensiden enthält und durch Zugabe von wäßriger Natriumhydroxid/ Natriumchloridlösung auf einen pH-Wert von 8 eingestellt ist, wird durch eine Elektrolysezelle gemäß Figur (Durchfluß 4,3 Liter/Stunde) gepumpt, deren Kathode aus einem Eisenrohr von 1 m Länge besteht, dessen Innendurchmesser 4 cm beträgt. Als Anode dient ein Eisenstab von 95 cm Länge und 2 cm Durchmesser. Diese Anode ist konzentrisch und isoliert in das Eisenrohr eingesetzt. Die zu separierende Emulsion wird von unten nach oben durch die Elektrolysezelle gepumpt. Auf der Zelle lastet ein Gleichstrom von 20 mA/cm²; die Spannung beträgt hierbei 3 Volt. Die die Zelle verlassende Lösung besteht aus einem Zweiphasengemisch: Dem geklärten Abwasser einerseits und darauf schwimmend dem Ölschlamm andererseits. Das geklärte Abwasser weist einen Restölgehalt von weniger als 1 ppm auf. Der Ölschlamm wird abdekantiert. Er weist noch einen Wassergehalt von 95% auf.

Beispiel 2

a) 10 l Bohröl, das aus 0,5 l handelsüblichem Konzentrat und 9,5 l Wasser hergestellt wird, wird mit Schwefelsäure auf einen pH-Wert von 7 gebracht und hierauf mit 4 l/Stunde durch die im Beispiel 1 beschriebene Elektrolyseapparatur gepumpt. Die Anode besteht aus einem Aluminiumstab. Der auf den Elektroden lastende Gleichstrom beträgt 80 mA/cm² bei etwa 10 Volt Spannung. Aus der Zelle tritt ein absolut klares, leicht grünlich verfärbtes Abwasser, dessen Restölgehalt unter 10 ppm liegt. Auf dem geklärten Abwasser schwimmt ein dicker Ölschlamm, der abdekantiert wird.

b) Wird das unter a) erwähnte Bohröl nach dem Durchgang durch die erste Elektrolysezelle durch eine zweite Zelle gepumpt, deren Anode aus Eisen besteht und auf welcher ein Gleichstrom von 10 mA/cm² und eine Spannung von 8 Volt lastet, so wird ein Abwasser mit einem Ölgehalt unter 2 ppm erhalten. Der Ölschlamm wird wieder abdekantiert.

## Beispiel 3

Die Ölemulsion gemäß Beispiel 1 wird unter den dort angegebenen Bedingungen in einer Elektrolysezelle elektrolysiert, die als Anode einen Aluminiumstab enthält. Der Durchsatz beträgt 2,3 l/Stunde. Das geklärte Abwasser weist einen Restölgehalt von weniger als 10 ppm auf. Der Ölschlamm wird abdekantiert.

## Beispiel 4

Eine Ölemulsion mit einem Gehalt von 200 ppm Heizöl wird unter folgenden Bedingungen in einer Elektrolysezelle, die als Anode einen Aluminiumstab enthält (sonst identisch wie in Beispiel 1 ist) elektrolysiert:

| | |
|---|---|
| Stromstärke: | 40 mA/cm² |
| Spannung: | 16,5 Volt |
| pH-Wert: | 6,0 |
| Durchsatz: | 6 l/Stunde. |

Zur Verbesserung der Abscheidung des Öls wird 1 g/l eines Flockungsmittels (Kondensa-tionsprodukt aus Dicyandiamid, Ammonium-chlorid und Formaldehyd) in die Ölemulsion gegeben. Das geklärte Abwasser hat einen Restölgehalt von weniger als 25 ppm. Der mit dem Flockungsmittel verdichtete Ölschlamm wird abdekantiert.

## Beispiel 5

Eine Ölemulsion mit einem Gehalt von 30 000 ppm Schneid-/Bohröl wird mit Schwefelsäure auf einen pH-Wert von 6,6 gebracht und mit Koaguliermittel (0,14 g Carboxymethylcellulose-Natriumsalz und 0,055 g eines Kondensa-tionsproduktes aus Dicyandiamid, Ammoni-umchlorid und Formaldehyd, Molverhältnis 1 : 1 : 2, pro Liter Emulsion) und Natriumchlorid (1,5 g pro Liter Emulsion) versetzt. Hierauf wird die Emulsion durch eine Elektrolysezelle gemäß Figur (Durchfluß 50 l/h) gepumpt, deren Kathode aus einem Stahlrohr von 120 cm Länge besteht, dessen Innendurchmesser 5 cm beträgt. Als Anode dient ein Aluminiumstab von 125 cm Länge und 4 cm Durchmesser. An die Elektroden wird ein pulsierender Gleichstrom von 26 A/7 V angelegt. Zur Verbesserung der Abscheidung der im Elektrolyseur gebildeten Flocken werden 0,26 g eines polymeren Aluminiumchlorids (Ge-halt: 15%, als $Al_2O_5$ bestimmt) pro Liter Emulsion zudosiert. Am Auslauf des Dekanters fließt das gereinigte Wasser mit einem Restölgehalt von 15 ppm (Tetrachlorkohlenstoff-Extrakt photometrisch bestimmt) aus.

Als Koaguliermittel kann man auch Natriumalginate, Gelatine oder Kernmehläther verwenden.

## Beispiel 6

Es wird wie in Beispiel 5 verfahren, wobei als Koaguliermittel 0,14 g/l eines teilweise veräther-ten Johannisbrotkernmehls und als Flockungs-mittel 0,19 g/l eines Copolymers aus 90 Mol-% Methacryloxyäthylentrimethylammoniumchlorid und 10 Mol-% Acrylamid (MG−6 · 10⁶) eingesetzt werden. Der Restölgehalt beträgt 18 ppm.

## Beispiel 7

Es wird wie in Beispiel 5 verfahren, wobei die zu trennende Öl-in-Wasseremulsion aus einem Abwasser des Automobilgewerbes (10 000 ppm Mineralöle und Tenside) besteht, das mit Natriumcarbonat auf einen pH-Wert von 7 gestellt wurde.

Als Koaguliermittel wird pro Liter Emulsion 0,14 g eines teilweise verätherten Johannisbrotkernmehls eingesetzt. Als Flockungsmittel wird 0,07 g/l Emulsion eines Copolymeres aus 90 Mol-% Acrylamid und 10 Mol-% Acrylsäure (MG−10⁷) verwendet. Der Restölgehalt beträgt 14 ppm.

## Beispiel 8

Eine Ölemulsion mit einem Gehalt von 10 000 ppm Schneid-/Bohröl wird mit Schwefelsäure auf einen pH-Wert von 6,6 gebracht und mit Koaguliermittel (0,024 g Carboxymethylcellulose-Natriumsalz pro Liter Emulsion) und Natriumchlorid (2,5 g pro Liter Emulsion) versetzt. Hierauf wird die Emulsion durch 2 in Serie geschaltete Elektrolysezellen (A) gemäß Figur, wie sie in Beispiel 5 beschrieben ist (Durchfluß 100 l/h), gepumpt. An die Elektroden wird ein pulsierender Gleichstrom von 30 A/8 V angelegt. Zur Verbesserung der Abscheidung der gebildeten Flocken werden 903 g eines Copolymers aus 90 Mol-% Methacryloxyäthylentrimethylammoniumchlorid und 10 Mol-% Acrylamid (MG−6 · 10⁶) pro Liter Emulsion zudosiert. Das gereinigte Wasser hat einen Restölgehalt von 20 ppm (Tetrachlorkohlenstoff-Extrakt photometrisch bestimmt).

## Patentansprüche

1. Verfahren zur kontinuierlichen Trennung von gegebenenfalls tensidhaltigen Öl-in-Wasser-Emulsionen durch Elektrolyse, dadurch gekennzeichnet, daß man solche Emulsionen bei einem pH-Wert von 5 bis 10 und bei einer Spannungsdifferenz zwischen den Elektroden von mindestens 1,5 Volt, unter Bildung von diskreten Ölteilchen elektrolysiert, diese Ölteilchen in einem Flotationsdekanter mit Hilfe von an der Kathode gebildeten gasförmigen Wasserstoff unter Bildung einer öligen Phase flotiert und abtrennt.

2. Verfahren nach Anspruch 1, dadurch gekennzeichnet, daß man die Elektrolyse nach Zugabe eines Koaguliermittels durchführt.

3. Verfahren nach einem der Ansprüche 1 oder 2, dadurch gekennzeichnet, daß man die gebildete ölige Phase durch Zugabe von Flockungsmitteln verdichtet.

4. Verfahren nach einem der Ansprüche 1 bis 3, dadurch gekennzeichnet, daß der pH-Wert der Emulsionen 6 bis 8 beträgt.

5. Verfahren nach einem der Ansprüche 1 bis 4, dadurch gekennzeichnet, daß die Spannungsdifferenz zwischen den Elektroden 1,5 bis 20 Volt beträgt.

6. Verfahren nach einem der Ansprüche 1 bis 5, dadurch gekennzeichnet, daß die Anode aus Graphit, Eisen oder Aluminium besteht.

7. Verfahren nach einem der Ansprüche 1 bis 6, dadurch gekennzeichnet, daß die Kathode aus Graphit oder Eisen besteht.

8. Verfahren nach einem der Ansprüche 1 bis 7, dadurch gekennzeichnet, daß die Stromstärke 10 bis 100 mA pro cm² Elektrodenfläche beträgt.

9. Verfahren nach einem der Ansprüche 1 bis 8, dadurch gekennzeichnet, daß man die kontinuierliche Elektrolyse stufenweise in mindestens zwei nacheinander geschaltete Elektrolysezellen durchführt, wobei die Abscheidung der Ölphase nach jeder Elektrolysenstufe oder einmal nach Beendigung der Elektrolyse erfolgt.

10. Verfahren nach einem der Ansprüche 2 und 3, dadurch gekennzeichnet, daß man als Koaguliermittel cellulosische Verbindungen, Alginate, Gelatine oder Gelatinederivate, Johannisbrotkernmehlpräparate oder polymeres Aluminiumchlorid verwendet.

11. Verfahren nach einem der Ansprüche 3 bis 10, dadurch gekennzeichnet, daß man als Flockungsmittel Umsetzungsprodukte aus Dicyandiamid, Aminsalzen und Formaldehyd einsetzt.

12. Verfahren nach einem der Ansprüche 3 bis 10, dadurch gekennzeichnet, daß man als Flockungsmittel Polymere auf (Meth)acrylsäure/(Meth)acrylamidbasis, die kationisch, anionisch oder neutral sein können und Molekulargewichte im Bereich von 10⁵ bis 10⁹ aufweisen, einsetzt.

13. Anwendung des Verfahrens nach einem der Ansprüche 1 bis 12 zur Trennung von Öl-in-Wasser-Emulsionen, die 10 bis 50 000 ppm Öl oder öliger Substanzen und 100 bis 5000 ppm eines Tensids enthalten.

14. Anwendung nach Anspruch 13, dadurch gekennzeichnet, daß die Öl-in-Wasser-Emulsionen Abwässer sind.

15. Vorrichtung zur Durchführung des Verfahrens nach einem der Ansprüche 1 bis 3, gekennzeichnet durch

(a) mindestens eine Elektrolysezelle (A) mit Kathode und Anode (2/3), in der mit praktisch konstantem Druck mittels einer Zubringerpumpe (1) eingespeiste, gegebenenfalls Koaguliermittel enthaltende Öl-in-Wasser-Emulsionen elektrolysiert werden,

(b) ein Verbindungsrohr (4) zur Überführung des Ölschlamm/Wassergemisches in einem Flotationsdekanter (B),

(c) einen Flotationsdekanter (B), bestehend aus einem inneren Rohr (7), das sich in einem äußeren Rohr (8) befindet, welches einerseits in einem kragenförmigen Ausguß (6) zur Abtrennung des Ölschlamms endet und andererseits mit einem Niveaurohr (5) zur Abtrennung des Wassers verbunden ist, und

(d) einen Schlammabtropfsack (9).

16. Vorrichtung nach Anspruch 15, dadurch gekennzeichnet, daß die Elektrolysezelle (A) zylindrisch ist, wobei deren Wand die Kathode (2) bildet und die eine konzentrisch eingesetzte Anode (3) enthält.

17. Vorrichtung nach einem der Ansprüche 15 und 16, dadurch gekennzeichnet, daß vor der Elektrolysezelle (A) und vor dem Eintritt des Ölschlamm/Wassergemisches in den Flotationsdekanter (B) Dosierpumpen (10/11) zur Einspeisung von Koagulier- bzw. Flockungsmitteln angebracht sind.

## Claims

1. A process for the continuous separation of oil-in-water emulsions, which may contain surfactants, by electrolysis, which process comprises electrolysing such emulsions at a pH value of 5 to 10 and under a potential difference between the electrodes of at least 1.5 volts, with the formation of discrete oil particles; floating these oil particles, in a flotation decanter, with the aid of hydrogen gas formes at the cathode; and then separating off the oily phase thus formed.

2. A process according to Claim 1, wherein electrolysis is performed after the addition of a coagulating agent.

3. A process according to either Claim 1 or 2, wherein the formed oily phase is condensed by the addition of flocculating agents.

4. A process according to any one of Claims 1 to 3, wherein the pH value of the emulsions is 6 to 8.

5. A process according to any one of Claims 1 to 4, wherein the potential difference between the electrodes is 1.5 to 20 volts.

6. A process according to any one of Claims 1 to 5, wherein the anode consists of graphite, iron or aluminium.

7. A process according to any one of Claims 1 to 6, wherein the cathode consists of graphite or iron.

8. A process according to any one of Claims 1 to 7, wherein the current strength is 10 to 100 mA per $cm^2$ of electrode surface area.

9. A process according to any one of Claims 1 to 8, wherein the continuous electrolysis is performed in stages in at least two electrolysis cells connected in series, the separation of the oil phase being carried out after each electrolysis stage or once after the completion of electrolysis.

10. A process according to Claims 2 and 3, wherein the coagulating agents used are: cellulosic compounds, alginates, gelatin or gelatin derivatives, carob bean flour preparations or polymeric aluminium chloride.

11. A process according to any one of Claims 3 to 10, wherein the flocculating agents used are: reaction products of dicyanodiamide, amine salts and formaldehyde.

12. A process according to any one of Claims 3 to 10, wherein the flocculating agents used are: polymers based on (meth)acrylic acid/(meth)-acrylamide, which can be cationic, anionic or neutral, and which have molecular weights in the range of $10^5$ to $10^9$.

13. The use of the process according to any one of Claims 1 to 12 for the separation of oil-in-water emulsions containing 10 to 50,000 ppm of oil or oily substances and 100 to 5,000 ppm of a surfactant.

14. The use according to Claim 13, whereby the oil-in-water emulsions are effluents.

15. A device for carrying out the process according to any one of Claims 1 to 3, which comprises:

a) at least one electrolysis cell (A) with cathode and anode (2/3), in which oil-in-water emulsions, optionally containing coagulating agents and fed in under virtually constant pressure by means of a feed pump (1), are electrolysed;

(b) a connecting pipe (4) for conveying the oil slurry/water mixture to a flotation decanter (B);

(c) a flotation decanter (B) consisting of an inner tube (7) located in an outer tube (8) which, on the one hand, terminates in a flange-shaped spout (6) for separating off the oil slurry and, on the other hand, is connected to a levelling tube (5) for separating off the water; and

(d) a slurry-draining bag (9).

16. A device according to Claim 15, wherein there is used a cylindrical cell (A), the wall of which forms the cathode (2) and which contains a concentrically inserted anode (3).

17. A device according to any one of Claims 16 to 18, wherein there are fitted, before the electrolysis cell (A) and before the admission of the oil slurry/water mixture into the flotation decanter (B), metering pumps (10/11) for feeding in coagulating agents and flocculating agents, respectively.

**Revendications**

1. Procédé pour la séparation en continu d'émulsions huile-dans-l'eau, contenant éventuellement des tensio-actifs, par électrolyse, caractérisé par le fait qu'on électrolyse ces émulsions à un pH compris entre 5 et 10 et sous une différence de potentiel entre les électrodes d'au moins 1,5 volt, en formant des particules d'huile séparées, qu'on soumet à la flottation et qu'on sépare ces particules d'huile dans un décanteur à flottation à l'aide de l'hydrogène gazeux formé sur la cathode en formant une phase huileuse.

2. Procédé selon la revendication 1, caractérisé par le fait qu'on effectue l'électrolyse après avoir ajouté un agent coagulant.

3. Procédé selon l'une des revendications 1 et 2, caractérisé par le fait qu'on concentre la phase huileuse formée en ajoutant un agent de floculation.

4. Procédé selon l'une des revendications 1 à 3, caractérisé par le fait que le pH des émulsions est compris entre 6 et 8.

5. Procédé selon l'une des revendications 1 à 4, caractérisé par le fait que la différence de potentiel entre les électrodes est comprise entre 1,5 et 20 volts.

6. Procédé selon l'une des revendications 1 à 5, caractérisé par le fait que l'anode est constituée par du graphite, du fer ou de l'aluminium.

7. Procédé selon l'une des revendications 1 à 6, caractérisé par le fait que la cathode est constituée par du graphite ou du fer.

8. Procédé selon l'une des revendications 1 à 7, caractérisé par le fait que l'intensité du courant est de 10 à 100 mA/$cm^2$ de surface d'électrode.

9. Procédé selon l'une des revendications 1 à 8, caractérisé par le fait qu'on effectue l'électrolyse en continu par palier dans au moins deux cellules d'électrolyse montées en série, la séparation de la phase huileuse s'effectuant après chaque stade d'électrolyse ou une seule fois après la fin de l'électrolyse.

10. Procédé selon l'une des revendications 2 et 3, caractérisé par le fait qu'on utilise comme agents coagulants des composés cellulosiques, des alginates, de la gélatine ou des dérivés de la gélatine, des préparations de farine de graine de caroube ou du chlorure d'aluminium polymère.

11. Procédé selon l'une des revendications 3 à 10, caractérisé par le fait qu'on utilise comme agents de floculation, des produits de réaction de diacyndiamide, de sels d'amine et de formaldéhyde.

12. Procédé selon l'une des revendications 3 à 10, caractérisé par le fait qu'on utilise comme agents de floculation, des polymères à base d'acide (méth)acrylique/(méth)acrylamide, qui peuvent être cationiques, anioniques ou neutres et qui ont un poids moléculaire compris entre $10^5$ et $10^9$.

13. Utilisation de procédé selon l'une des revendications 1 à 12, pour la séparation d'émulsions huile-dans-l'eau qui contiennent 10 à 50 000 ppm d'huile ou de substances huileuses, et 100 à 5000 ppm d'un tensio-actif.

14. Utilisation selon la revendication 13, caractérisée par le fait que les émulsions huile-dans-l'eau sont des eaux résiduaires.

15. Dispositif pour effectuer le procédé selon l'une des revendications 1 à 3, caractérisé par:

(a) au moins une cellule d'électrolyse (A) avec une cathode et une anode (2/3), dans laquelle sont électrolysées des émulsions huile-dans-l'eau contenant éventuellement un agent coagulant, alimentées sous une pression pratiquement constante à l'aide d'une pompe d'alimentation (1),

(b) un tube de communication (4) pour le transport du mélange boue huileuse/eau dans un décanteur à flottation (B),

(c) un décanteur à flottation (B) constitué par un tube intérieur (7) qui se trouve dans un tube extérieur (8) qui, d'une part, débouche dans un bec (6) en forme de faux-col pour la séparation de la boue huileuse et qui, d'autre part, est relié avec un tube de niveau (5) pour la séparation de l'eau, et

(d) un sac égouttoir (9) pour la boue.

16. Dispositif selon la revendication 15, caractérisé par le fait que la cellule d'électrolyse (A) est cylindrique, sa paroi formant la cathode (2) et qui contient une anode (3) placée d'une façon concentrique.

17. Dispositif selon l'une des revendications 16 à 18, caractérisé par le fait qu'avant la cellule d'électrolyse (A) et avant l'entrée du mélange boue huileuse/eau dans le décanteur à flottation (B), sont placées des pompes doseuses (10/11) pour l'alimentation en agent coagulant et en agent de floculation, respectivement.